# EUROPÄISCHE PATENTSCHRIFT

(11) **EP 0 438 075 B1**
(45) Veröffentlichungstag und Bekanntmachung des Hinweises auf die Patenterteilung: **26.04.1995**
(21) Anmeldenummer: 91100215.2
(22) Anmeldetag: 09.01.1991
(51) Int. Cl.: H04J 14/02

(54) **Optisches Kabelfernsehübertragungssystem**
Optical cable television transmission system
Système optique de transmission de télévision par câble

(30) Priorität: 16.01.1990 DE 4001039
(43) Veröffentlichungstag der Anmeldung: 24.07.1991
(73) Patentinhaber: Alcatel SEL Aktiengesellschaft, D-70435 Stuttgart (DE)
(72) Erfinder: Heidemann, Rolf, Dr., W-7146 Tamm (DE); Krimmel, Heinz, W-7000 Stuttgart 30 (DE)
(74) Vertreter: Kugler, Hermann, Dipl.-Phys.

(56) Entgegenhaltungen:
- EP-A- 0 394 772
- DE-A- 3 010 802
- DE-A- 3 203 785
- GB-A- 521 340
- PATENT ABSTRACTS OF JAPAN, Band 6, Nr. 42 (E-098), 16. März 1982;& JP-A-56 158 532 (YAGI ANTENNA) 07-12-1981
- IEEE JOURNAL ON SELECTED AREAS IN COMMUNICATIONS, Band 6, Nr. 6, Juli 1988,Seiten 974-986, IEEE, New York, NY, US; G.J. FOSCHINI: "Sharing of the optical band in local systems"

## Beschreibung

Die Erfindung betrifft ein System nach dem Oberbegriff des Patentanspruchs 1. Das Problem der Übertragung eines Frequenzmultiplex-Signals, das ein breites Frequenzband belegt, stellt sich z.B. bei der Kabelfernseh-Übertragung. Dort müssen eine Vielzahl von Signalen, von denen jedes ein Fernseh- oder Rundfunkprogramm enthält, übertragen werden.

Ein System nach dem Oberbegriff des Patentanspruchs 1 ist bekannt aus der DE-A1 32 03 785, Fig. 4. Bei dem bekannten System wird das gesamte Frequenzmultiplex-Signal dadurch über einen einzigen Lichtwellenleiter übertragen, daß mehrere Übertragungs-Frequenzbänder gebildet werden, diese Übertragungs-Frequenzbänder jeweils in ein optisches Signal mit eigener Wellenlänge umgesetzt werden und die optischen Signale im Wellenlängenmultiplex über den Lichtwellenleiter übertragen werden. Empfangsseitig erfolgt eine entsprechend umgekehrte Verarbeitung. Der erste Teil der Sendeeinrichtung zerlegt das ursprünglich breite Frequenzband und bildet so die Übertragungs-Frequenzbänder. Es ist bei dem bekannten System nicht angegeben, wie die verschiedenen Übertragungs-Frequenzbänder zu wählen sind, damit sie die für die verschiedenen optischen Sender geeignete Bandbreite haben.

Es ist daher die Aufgabe der Erfindung, ein zur optischen Übertragung des vorstehend erläuterten breitbandigen Frequenzmultiplex-Signals über einen einzigen Lichtwellenleiter geeignetes System zu schaffen.

Die Aufgabe wird wie im Patentanspruch 1 angegeben gelöst. Weiterbildungen ergeben sich aus den Unteransprüchen.

Der wesentliche Vorteil der Erfindung liegt darin, daß für jeden der optischen Sender das elektrische Eingangssignal, das durch Intensitätsmodulation in ein optisches Signal umzusetzen ist, eine Bandbreite von weniger als eine Oktave, bezogen auf seine unterste Frequenz, hat. Dadurch haben die Intermodulationsprodukte zweiter Ordnung, die aufgrund von Nichtlinaritäten des Lasers entstehen, Frequenzen, die in unbelegte Frequenzbereiche fallen und sich daher in der Empfangseinrichtung leicht herausfiltern lassen. Infolgedessen läßt sich bei jedem der optischen Sender der Laser stärker aussteuern, so daß sich eine größere Streckendämpfung überbrücken läßt. Dadurch, daß das gesamte breite Frequenzband in Teilen geringerer Bandbreite verarbeitet wird, muß der Modulator in der Sendeeinrichtung und der Demodulator in der Empfangseinrichtung keine hohen Bandbreitenanforderungen erfüllen.

Die Erfindung wird nun anhand der Zeichnungen beispielsweise näher erläutert.

### Es zeigen:

- Fig. 1: ein Blockschaltbild der Sendeeinrichtung des erfindungsgemäßen Systems,
- Fig. 2: ein Blockschaltbild der zugehörigen Empfangseinrichtung des erfindungsgemäßen Systems,
- Fig. 3: schematisch die Signalspektren zur Erläuterung der erfindungsgemäßen Signalverarbeitung,
- Fig. 4: ein erstes Ausführungsbeispiel eines Modulators 10 aus Fig. 1,
- Fig. 5: ein Ausführungsbeispiel eines Demodulators 20 aus Fig. 2,
- Fig. 6: ein zweites Ausführungsbeispiel eines Modulators 10 aus Fig. 1, bei dem das Frequenzband in mehreren Teilen in das Übertragungs-Frequenzband umgesetzt wird,
- Fig. 7: ein erstes Ausführungsbeispiel einer Schaltung zur Trägerrückgewinnung mit Phasenregelschleife,
- Fig. 8: eine zweites Ausführungsbeispiel einer Schaltung zur Trägerrückgewinnung mit einem Filter und einem Trägerverstärker, und
- Fig. 9: ein drittes Ausführungsbeispiel einer Schaltung zur Trägerrückgewinnung mit einem injektionssynchronisierten Oszillator.

Die Erfindung wird im folgenden anhand eines Kabelfernseh-Verteilnetzes beschrieben, jedoch wird darauf hingewiesen, daß sie jegliche Anwendungsfälle umfaßt, bei denen eine Vielzahl von Signalen unterschiedlicher Frequenz, die ein breites Frequenzband belegen, also ein breitbandiges Frequenzmultiplex-Signal, von einem Punkt A zu einem oder mehreren Punkten B zu übertragen ist.

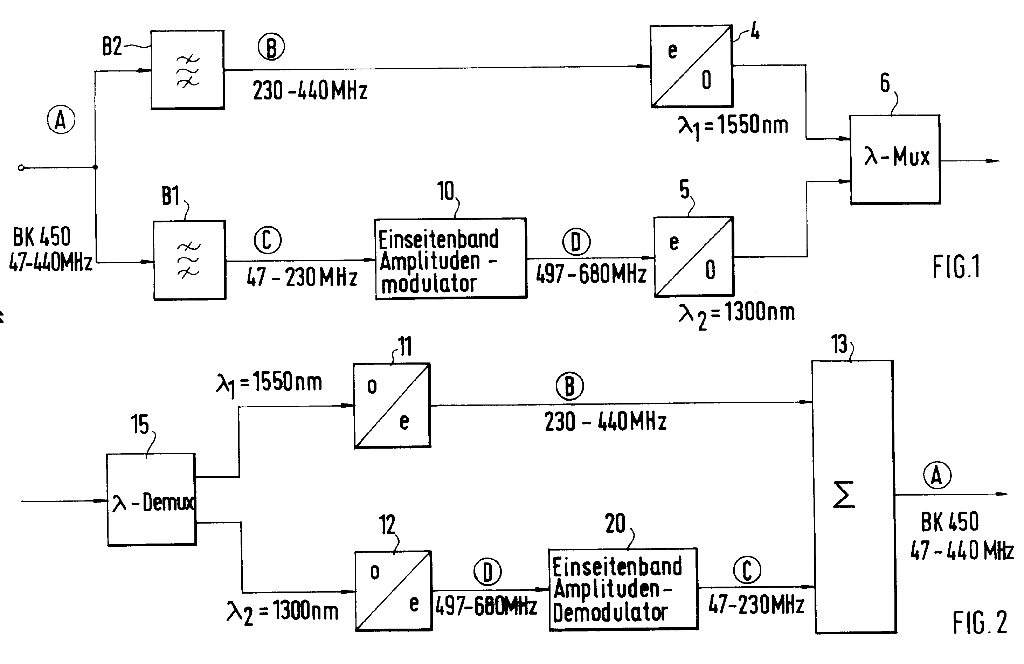

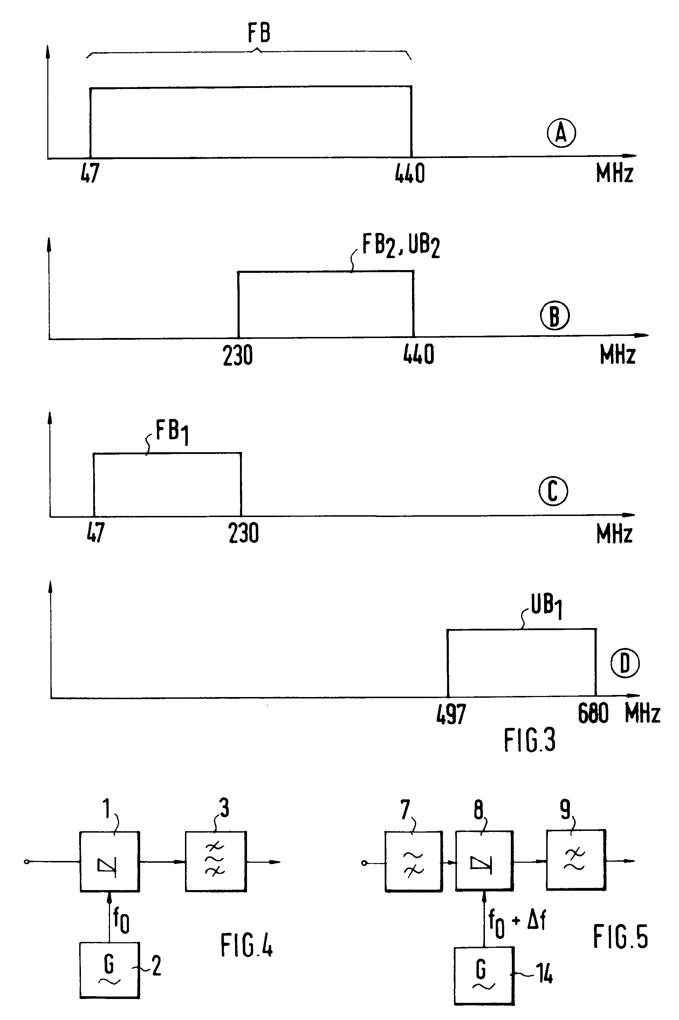

Ein Band von Signalen unterschiedlicher Frequenzen, z.B. für Fernseh- und Hörfunkübertragung gemäß dem Koaxial-KTV-System BK 450 der Deutschen Bundespost mit einer Bandbreite von 47 bis 440 MHz, wird in der Sendeeinrichtung nach Fig. 1 des erfindungsgemäßen Systems in den Eingang eingegeben und gelangt von dort parallel auf zwei verschiedene Bereichsfilter B1 und B2. Das dort anliegende breite Frequenzband ist im Spektrum A der Fig. 3 mit FB bezeichnet. Die Bereichsfilter B1 und B2 sind Bandpaßfilter, die aus dem breiten Frequenzband je einen speziellen Frequenzbereich herausfiltern. So läßt das Bereichsfilter B1 einen unteren Teil FB₁ (Fig. 3) von 47 bis 230 MHz und das obere Bereichsfilter einen oberen Teil FB₂ von 230 bis 440 MHz durch. In anderen Worten: Das breite Frequenzband FB wird mittels der Bereichsfilter B1 und B2 in zwei Teilbänder aufgeteilt. Die Spektren C und B aus Fig. 3 zeigen schematisch die an den ebenso bezeichneten Ausgängen der Filter B1 und B2 erscheinenden Teilbänder.

Erfindungsgemäß werden durch die Aufteilung des breiten Frequenzbandes FB in Teilbänder und deren weitere Verarbeitung Übertragungs-Frequenzbänder erzeugt, von denen jedes, bezogen auf seine unterste Frequenz, weniger als eine Oktave breit ist, und jedes dieser Übertragungsbänder wird mit jeweils einem optischen Sender in ein optisches Signal umgesetzt.

Beim Ausführungsbeispiel nach Fig. 1 hat das Teilband, das am Ausgang B des Bereichsfilters B2 erscheint, einen Frequenzbereich von 230 bis 440 MHz, also eine Bandbreite von weniger als einer Oktave, d.h. dieses Teilband kann ohne weitere Verarbeitung als Übertragungs-Frequenzband verwendet werden. Es ist deshalb in Fig. 3 das Spektrum B nicht nur mit der Bezeichnung FB₂ für Teilband, sondern auch mit der Bezeichnung UB₂ für Übertragungs-Frequenzband bezeichnet. Das am Ausgang C des Bereichsfilters B1 erscheinende Teilband hat einen Frequenzbereich von 47 bis 230 MHz und ist in Fig. 3 mit FB₁ bezeichnet. Da es viel mehr als eine Oktave breit ist, wird es durch Einseitenband-Amplitutenmodulation in ein höherfrequentes Übertragungs-Frequenzband umgesetzt, das weniger als eine Oktave breit ist. Im Ausführungsbeispiel ist dies ein Übertragungs-Frequenzband UB₁ (Fig. 3), mit einem Frequenzbereich von 497 bis 680 MHz.

Zum Zwecke der Einseitenband-Amplitudenmodulation enthält die Sendeeinrichtung nach Fig. 1 einen Einseitenband-Amplitudenmodulator 1, der mit einer von einem Generator 2 erzeugten Trägerschwingung mit einer Trägerfrequenz f₀ von z.B. 450 MHz arbeitet. Einzelheiten zur Einseitenband-Amplitudenmodulation werden später erläutert.

Zur optischen Übertragung der wie beschrieben gebildeten Übertragungsfrequenz-Bänder UB₂ und UB₁ sind zwei optische Sender, auch Elektrisch-Optisch-Wandler genannt, vorhanden, ein optischer Sender 4 mit einer Betriebswellenlänge λ₁ von 1550 nm für das Übertragungs-Frequenzband von 230 bis 440 MHz und ein optischer Sender 5 mit einer Betriebs-Wellenlänge λ₂ von 1300 nm für das Übertragungs-Frequenzband UB₁ (Spektrum D in Fig. 3). Diese beiden optischen Sender bilden aus ihrem elektrischen Eingangssignal, das weniger als eine Oktave breit ist, durch Intensitätsmodulation ihres Lasers optische Signale mit den genannten Wellenlängen, die ein Wellenlängen-Multiplexer 6 zu einem optischen Wellenlängen-Multiplexsignal zusammenfaßt, das über den einzigen Lichtwellenleiter vom Ausgang der optischen Sendeeinrichtung nach Fig. 1 zur optischen Empfangseinrichtung des Systems, die in Fig. 2 gezeigt ist, übertragen wird.

Selbstverständlich ist es auch möglich, bei breiteren Frequenzbändern als dem hier betrachteten vielleicht sogar erforderlich, das breite Frequenzband in mehr als zwei Teilbänder aufzuteilen und dann auch wie im hier betrachteten Beispiel diejenigen Teilbänder, die breiter als eine Oktave sind, durch Einseitenband-Amplitudenmodulation in Übertragungsbänder umzusetzen, die weniger als eine Oktave breit sind.

Anhand von Fig. 2 wird nun die der Sendeeinrichtung nach Fig. 1 entsprechende Empfangseinrichtung des Systems erläutert. Das empfangene Wellenlängen-Multiplexsignal wird in einem Wellenlängen-Demultiplexer 15 in die beiden optischen Signale mit den Wellenlängen λ₁ und λ₂ zerlegt, und die beiden optischen Signale werden in optischen Empfängern 11 und 12, auch Optisch-Elektrisch-Wandler genannt, in elektrische Signale umgewandelt, die die Übertragungs-Frequenzbänder von 230 bis 440 MKz und von 497 bis 680 MHz belegen. Diese Übertragungs-Frequenzbänder, in Fig. 3 als Spektren B und D bezeichnet, erscheinen also an den Ausgängen optischen Empfänger 11 und 17. Das am Ausgang des optischen Empfängers 17 erscheinende Übertragungs-Frequenzband UB₁ von 497 bis 680 MHz wird in einem Einseitenband-Amplituden-Demodulator 20 in das ursprüngliche Teilband FB₁ (Spektrum C in Fig. 3) von 47 bis 230 MHz umgesetzt. Ein Leistungsaddierer 13 faßt schließlich das am Ausgang des optischen Empfängers 11 erscheinende Teilband FB₂ (Spektrum B in Fig. 3) und das am Ausgang des Einseitenband-Amplituden-Demodulators 20 erscheinende Teilband FB₁ zum ursprünglichen Frequenzband (Spektrum A in Fig. 3) mit dem Frequenzbereich von 47 bis 440 MHz zusammen.

Der folgende Teil der Beschreibung betrifft die Ausgestaltung des Einseitenband-Amplitudenmodulators 10 der Sendeeinrichtung nach Fig. 1 und des Einseitenband-Amplituden-Demodulators 20 der Empfangseinrichtung nach Fig. 2. Ein Ausführungsbeispiel des Einseitenband-Amplitudenmodulators 10 aus Fig. 1 ist in Fig. 4 gezeigt. Das umzusetzende Frequenzband wird im Einseitenband-Amplitudenmodulator 10 auf den Eingang eines Modulators 1 gegeben. Dieser Modulator erhält von einem Trägerfrequenzgenerator 2 einen Träger mit einer Frequenz f₀, im Beispiel 450 MHz, und bewirkt zunächst eine Zweitseitenband-Amplitudenmodulation des Trägers. Ein dem Modulator 1 nachgeschaltetes Filter 3 filtert aus dem Ausgangssignal des Modulators das obere Seitenband heraus und gibt dieses auf den Ausgang des Einseitenband-Amplitudenmodulators 10 (Fig. 1).

Das Filter 3 ist, wenn es wie erwähnt, das obere Seitenbahnd durchläßt, ein Bandpaß für das obere Seitenband. Man könnte statt des oberen Seitenbandes auch das untere verwenden. Dann müßte das Filter 3 ein Bandpaß für das untere Seitenband sein. In jedem Falle ist es ein Einseitenband-Filter.

Der Modulator 1, der auch als Mischer bezeichnet werden kann, der Generator 2 und das Einseitenband-Filter 3 bilden also zusammengenommen einen Einseitenband-Amplitudenmodulator. Dieser setzt sein Eingangs-Frequenzband durch Einseitenband-Amplitudenmodulation eines hochfrequenten Trägers in ein höherfrequentes Band um. Dieses wird im folgenden als Übertragungs-Frequenzband bezeichnet, weil es das zum Zweck der optischen Übertragung gebildete Frequenzband, d.h. das zur Intensitätsmodulation des Halbleiterlasers verwendete Frequenzband ist.

Die Funktion des bisher beschriebenen Modulators 10 nach Fig. 1 wird nun anhand von Fig. 4 eingehender erläutert.

Durch Mischung mit dem Träger mit der Frequenz f₀ im Modulator 1 ergibt sich zunächst eine Zweiseitenband-Amplitudenmodulation mit einem unteren Frequenzband und einem oberen Frequenzband. Bei dieser Modulation kann, je nach Ausführung des Mischers, der Träger unterdrückt werden oder im Ausgangssignal des Modulators noch vorhanden sein. Das Signalspektrum mit dem Träger wird zur Intensitätsmodulation des Halbleiterlasers verwendet, wenn der Träger zur Empfangseinrichtung mit übertragen werden soll.

Der Einseitenband-Amplituden-Demodulator 20 nach Fig. 2, detaillierter in Fig. 5 gezeigt, empfängt vom Ausgang des optischen Empfängers ein elektrisches Signal, dessen Spektrum im wesentlichen wie das Spektrum D in Fig. 3 aussieht, jedoch Intermodulationsprodukte mit Frequenzen unterhalb der Trägerfrequenz f₀ enthält. Um diese zu entfernen, wird das Spektrum in einem Einseitenband-Filter 7 gefiltert, so daß ein Spektrum entsteht, in dem der Träger, soweit mit vernünftigen Aufwand möglich, unterdrückt ist. Ein Demodulator 8, der auch als Mischer bezeichnet werden könnte, mischt das Spektrum mit dem Träger f₀, und ein nachgeschalteter Tiefpaß 9 ergibt an seinem Ausgang das in das ursprüngliche Frequenzband FB₁ rückumgesetzte übertragene Signal, wie es in Fig. 3 als Spektrum C dargestellt ist.

Der für den Demodulator 8 erforderliche Träger f₀ kann dadurch bereitgestellt werden, daß er aus dem empfangenen Signal wiedergewonnen wird. Hierzu ist eine Trägerrückgewinnungs-Schaltung erforderlich, für die an späterer Stelle einige Beispiele gegeben werden. Der Träger f₀ wird dadurch von der Sendeeinrichtung zur Empfangseinrichtung des Systems übertragen, daß er, wie oben erläutert, bei der Einseitenband-Amplitudenmodulation nicht unterdrückt wird. Falls der Modulator 1 und das Einseitenband-Filter 3 aber die Eigenschaft haben, den Träger zu unterdrücken, kann er auch vom Ausgang des Generators 2 abgegriffen, geeignet verstärkt oder gedämpft und dem Ausgangssignal des Einseitenband-Filters 3 hinzuaddiert werden.

Es gibt auch Anwendungsfälle, bei denen es nicht zwingend notwendig ist, daß das am Ausgang des Demodulators 20 erscheinende Frequenzband frequenzmäßig genau mit dem in den Modulator 10 der Sendeeinrichtung eingespeisten Frequenzband übereinstimmt, sondern eine Frequenzverschiebung von Δf toleriert werden kann.

Dies ist z.B. dann der Fall, wenn am Ausgang der Empfangseinrichtung nicht eine weitere Signalverarbeitung, z.B. Modulation, Multiplexbildung usw., zum Zwecke einer anschließenden Fern-Übertragung erfolgen muß, sondern das Frequenzband direkt auf die Endgeräte, für die seine Signale bestimmt sind, z.B. Fernsehempfänger, gegeben wird. Diese Endgeräte tolerieren die Frequenzverschiebung. Auch der Empfänger selbst verträgt eine gewisse Verschiebung der Frequenz oder Phase des Trägers. Daher kann in solchen Fällen auf eine Trägerrückgewinnung vollständig verzichtet werden.

Für solche Fälle ist das Ausführungsbeispiel nach Fig. 5 geeignet, bei dem der Träger nicht aus dem empfangenen Signal wiedergewonnen wird, sondern in der Empfangseinrichtung in einem dort vorhandenen freischwingenden Generator 14 erzeugt wird. Der Generator 14 erzeugt einen Träger, der bis auf eine Ungenauigkeit Δf mit dem vom Generator 2 der Sendeeinrichtung erzeugten Träger übereinstimmt. Zweckmäßigerweise wird in diesem Falle in der Sendeeinrichtung ein Einseitenband-Filter 3 verwendet, das den Träger soweit wie möglich unterdrückt.

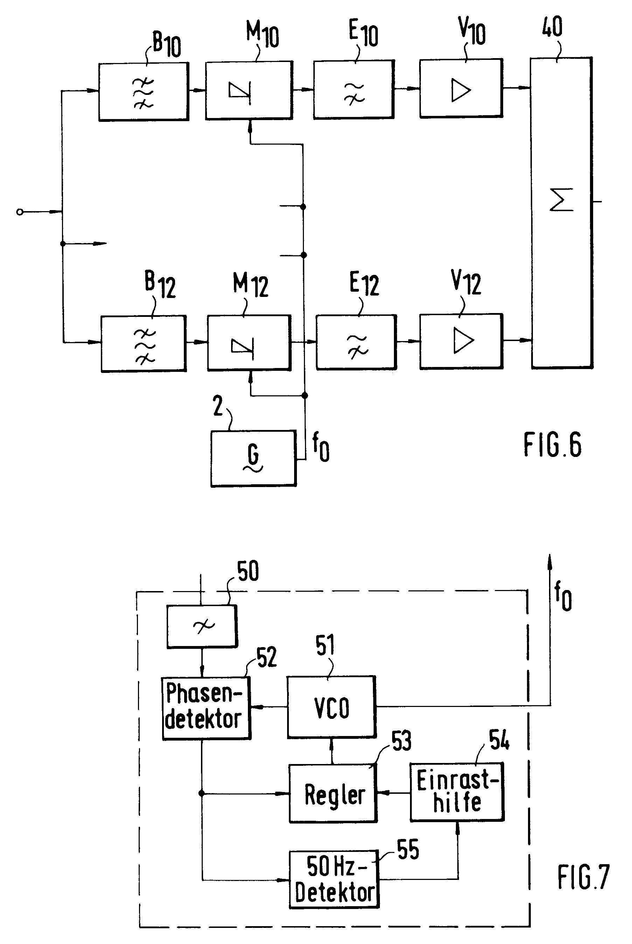

Ein Ausführungsbeispiel der Erfindung, das den Einseitenband-Amplituden-Modulator 10 der Sendeeinrichtung nach Fig. 1 betrifft, wird nun anhand von Fig. 6 erläutert. Das umzusetzende Frequenzband wird parallel auf drei verschiedene Bereichsfilter B₁₀ bis B₁₂ gegeben, wobei jedes Bereichsfilter einen speziellen Bereich aus dem Band herausfiltert. Die Bereiche sind dabei so gewählt, daß die entstehenden Teilbänder bezogen auf ihre untere Grenzfrequenz weniger als eine Oktave breit sind und daß jedes der im Band enthaltenen Signale in einem der Teilbänder liegt. (Unbelegte Bereiche des Bandes können unterdrückt werden.) Es wird also das Band in drei Teilbänder aufgeteilt. Dabei kann auch die im Band vorhandene Unterteilung in Bereiche berücksichtigt werden. Beispielsweise kann durch die Bereichsfilter B₁₀ und B₁₂ das Band in die folgenden drei Teilbänder aufgeteilt werden:
Teilband 1 = 47 - 68 MHz
Teilband 2 = 88 - 108 MHz
Teilband 3 = 125 - 230 MHz

Jedem der Bereichsfilter B₁₀ bis B₁₂ ist ein Modulator M₁ bis M₄ nachgeschaltet, der auch als Mischer bezeichnet werden könnte, und der wie anhand von Fig. 4 beschrieben sein Eingangs-Frequenzband mit dem von dem Trägergenerator 2 erzeugten Träger mischt. Ebenfalls wie in Fig. 4 gezeigt ist dem jeweiligen Modulator ein Einseitenband-Filter E₁₀ bis E₁₂ nachgeschaltet, das das untere Seitenband unterdrückt.

Jeder Modulator bildet mit dem nachgeschalteten Einseitenband-Filter also einen Modulator, der das ihm zugeführte Frequenzband durch Einseitenband-Amplitudenmodulation des hochfrequenten Trägers in ein höherfrequentes Band umsetzt. Dieses Frequenzband wird mit einem der Verstärker V₁₀ bis V₁₂ verstärkt, und alle vier verstärkten Frequenzbänder werden in einem passiven Leistungsaddierer 40 addiert, so daß ein Signalgemisch mit einem Spektrum gemäß dem Spektrum D nach Fig. 2 entsteht. Dieses Signalgemisch wird zur Intensitätsmodulation des Lasers verwendet. Wie anhand von Fig. 4 beschrieben, kann auch bei Verwendung eines Einseitenband-Amplitudenmodulators nach Fig. 6 der Träger unterdrückt oder durchgelassen oder direkt vom Ausgang des Generators hinzugefügt werden.

Auch der Einseitenband-Amplitudenmodulator nach Fig. 6 beruht darauf, daß das zu übertragende Frequenzband durch Einseitenband-Amplitudenmodulation eines hochfrequenten Trägers in eine Übertragungs-Frequenzband umgesetzt wird. Er hat nur die Besonderheit, daß das Frequenzband in mehrere Teile zerlegt und dem entsprechend in mehreren Teilen in das Übertragungs-Frequenzband umgesetzt wird.

Der Vorteil des Einseitenband-Amplitudenmodulators nach Fig. 6 liegt darin, daß Intermodulationsprodukte zweiter Ordnung irgendeines Signals des Eingangs-Signalgemischs eines Modulators in einem Frequenzbereich liegen, in dem keine weiteren Signale aus dem Eingangs-Signalgemisch desselben Modulators liegen. Kein Eingangssignal eines Modulators kann also mit Intermodulationsprodukten eines anderen Eingangssignals desselben Modulators interferieren.

Ein weiterer Vorteil ist, daß die weitgehend voneinander unabhängigen Zweige, entsprechend unterschiedlichen Zuverlässigkeits-, oder Qualitätsanforderungen ausgestattet werden können. Durch die Aufteilung in mehrere Zweige ist auch ein stufenweiser Ausbau des Systems entsprechend wachsenden Kommunikationsbedürfnissen der angeschlossenen Teilnehmer möglich. Derselbe Vorteil gilt auch bereits für die beiden Zweige der gesamten Sende- oder Empfangseinrichtung nach Fig. 1 bzw. Fig. 2.

Anhand von Fig. 7 wird nun ein erstes Ausführungsbeispiel der oben erwähnten Trägerrückgewinnungs-Schaltung erläutert. Im wesentlichen ist es eine an sich bekannte Phasenregelschleife (engl.: Phase Locked Loop (PLL)), bestehend aus einem spannungsgesteuerten Oszillator 51 (engl.: Voltage Controlled Oscillator (VCO)), einem Phasendetektor 52 und einem Regler 53. Das Eingangssignal ist das Spektrum wie es am Ausgang des optischen Empfängers 12 aus Fig. 2 erscheint. Es wird auf den Eingang eines Vorfilters 50 gegeben, welches das Signalspektrum relativ zum Träger um mehr als 10 dB unterdrückt. Hierfür eignet sich ein Oberflächenwellenfilter mittlerer Güte (einige Hundert). Vom Vorfilter 50 empfängt der Phasendetektor 52 das den übertragenen Träger enthaltende Spektrum. Durch Vergleich des vom Vorfilter 50 empfangenen Trägers mit der vom Oszillator 51 erzeugten Schwingung erzeugt er eine Regelgröße für den Regler 53, der daraufhin den Oszillator 51 so steuert, daß die von diesem erzeugte Trägerschwingung in der Frequenz mit dem empfangenen Träger f₀ übereinstimmt.

Die bisher beschriebene Phasenregelschleife ist so zu bemessen, daß eine Restmodulation durch das bei der Frequenz f₀+40 MHz liegende Signal sicher unterdrückt ist. Im nicht eingerasteten Zustand der Phasenregelschleife, insbesondere falls die Phasenregelschleife vom Vorfilter 50 kein Eingangssignal empfängt (z.B. bei Unterbrechung der Übertragungsstrecke, bei ausgeschaltetem Sender), könnte der Oszillator 51 mit einer Frequenz schwingen, die in der Nähe der Frequenz des Bildträgers eines bei f₀+40 MHz liegenden Fernsehsignals liegt. Der Oszillator könnte sich dann in unerwünschter Weise auf die Frequenz dieses Bildträgers synchronisieren.

Damit dies nicht geschehen kann, ist eine Steuerschaltung 54 vorhanden, die als "Einrasthilfe" bezeichnet werden kann. Diese steuert den Regler 53 der Phasenregelschleife im nicht eingerasteten Zustand so, daß die Frequenz des Oszillators f_{0VCO} in diesem Zustand mit Sicherheit unterhalb der (vorgegebenen) Frequenz f₀ liegt. (Bei Verwendung des unterern Seitenbandes muß f_{0VCO} oberhalb f₀ liegen.) Wenn dann die Phasenregelschleife vom Vorfilter 50 ein Referenzsignal f₀ empfängt, das im Fangbereich der Phasenregelschleife liegt (d.h. wen die Differenz zwischen f₀ und f_{0VCO} kleiner als der Fangbereich ist), so synchronisiert sie sich auf dieses Referenzsignal f₀, und die vorstehend geschilderte unerwünschte Synchronisation ist ausgeschlossen.

Falls aus irgendwelchen Gründen doch einmal der Phasenregelkreis sich auf einen Bildträger synchronisieren sollte, so entsteht am Ausgang des Phasendetektors 52 ein Signal, bei dem eine Komponente mit 50 Hz (Halbbildfrequenz) dominiert. Hierfür ist ein 50 Hz-Detektor 55 vorhanden, der das Ausgangssignal des Phasendetektors überwacht und, falls er die Komponente feststellt, ein Steuersignal zu der Einrasthilfe 54 gibt, damit diese eine Neusynchronisation veranlaßt.

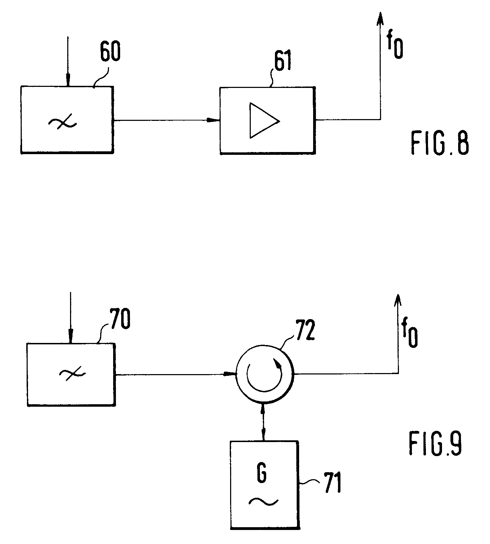

Ein zweites Ausführungsbeispiel einer Trägerrückgewinnungs-Schaltung zeigt Fig. 8. Hier gelangt das den übertragenen Träger enthaltende Spektrum auf ein Filter 60 mit hoher Güte, welches das Restsignal relativ zum Träger f₀ unterdrückt, und ein frequenzselektiver Trägerverstärker 61 verstärkt den in dem Ausgangssignal des Filters 60 enthaltenen Träger. Eine Unterdrückung des Restsignals relativ zum Träger f₀ von mehr als 50 dB läßt sich mit einem Oberflächenwellenfilter und einem selektiven Trägerverstärker erreichen. Diese Schaltung ist wesentlich einfacher als die in Fig. 7, hat jedoch den Nachteil, daß die Toleranz von f₀ in der Sendeeinrichtung sehr gering sein muß und daß das Filter hoher Güte eine hohe Genauigkeit und Alterungsstabilität haben muß.

Ein drittes Beispiel zeigt die Fig. 9. Auch hier gelangt das den übertragenen Träger enthaltende Spektrum auf ein Vorfilter 70, welches das Restsignal relativ zum Träger unterdrückt. Ein durch das Ausgangssignal des Vorfilters 70 und einen Y-Zirkulator 72 injektionssynchronisierter Oszillator 71 wird auf die Frequenz f₀ des empfangenen Trägers synchronisiert.

Nachstehend werden einige Ergänzungen erläutert. Als Beispiel für eine geeignete Trägerfrequenz f₀ wurde in der bisherigen Beschreibung 450 MHz angegeben. Geeignet ist jede Trägerfrequenz, mit der das umzusetzende Frequenzband in ein Übertragungs-Frequenzband umgesetzt werden kann, das bezogen auf seine unterste Frequenz weniger als eine Oktave breit ist, d.h. bei dem die oberste Frequenz weniger als das Doppelte der untersten Frequenz beträgt.

Das vorstehend beschriebene analoge Vielkanalübertragungssystem unterliegt einer hohen Anforderung an den Signal-Geräusch-Abstand, nämlich mehr als 52 dB. Jegliche Nichtliniaritäten von Teilen des Systems (Lasertreiber, Halbleiterlaser einschließlich Rückwirkungen durch die Lichwellenleiterstrecke, Empfänger-Eingangsstufe mit rauscharmem Verstärker) sind daher besonders kritisch. Es ist daher wünschenswert, die kritischen Teile des Systems im Betrieb zu überwachen und gegebenenfalls ein Alarmsignal zu erzeugen.

Es ist zu befürchten, daß durch Alterung oder Fehlfunktion von solchen Teilen die Intermodulationsprodukte zweiter Ordnung besonders stark ansteigen. Erfindungsgemäß ist in der Empfangseinrichtung ein Leistungsdetektor für die Intermodulationsprodukte vorhanden, der ein Alarmsignal erzeugt, wenn diese einen voreingestellten Schwellenwert überschreiten. Hierdurch ist es vermeidbar, spezielle Pilottöne zur Überwachung des Systems zu übertragen. Zweckmäßigerweise wird als zu überwachendes Signal das Ausgangssignal der Vorverstärkerstufe, auch Eingangsstufe genannt, des optischen Empfängers verwendet.

In den vorstehenden Ausführungsbeispielen ist der Modulator, der die Einseitenband-Amplitudenmodulation des Trägers bewirkt, als Mischer mit nachgeschaltetem Einseitenband-Filter dargestellt. Selbstverständlich sind auch jegliche anderen Arten von Modulatoren, die eine solche Modulation bewirken, geeignet, z.B. ein nach der sogenannten Phasenmethode oder ein nach dem Pilotton-Verfahren (Verfahren nach Weaver) arbeitender Modulator, wie sie z.B. in Meinke-Gundlach: "Taschenbuch der Hochfrequenztechnik", 4. Auflage, Band 4, Springer-Verlag Berlin, Heidelberg, New York, Tokio, 1986, Seiten 01 bis 06 erläutert sind.

## Patentansprüche

1. System zur optischen Übertragung eines ein breites Frequenzband belegenden Frequenzmultiplex-Signals über einen einzigen Lichtwellenleiter,
- mit einer Sendeeinrichtung, die enthält: einen mehrere Übertragungs-Frequenzbänder erzeugenden ersten Teil und einen zweiten Teil, der die erzeugten Übertragungs-Frequenzbänder in optische Signale verschiedener Wellenlängen umsetzt und zu einem Wellenlängenmultiplex-Signal als zu übertragendem optischen Signal zusammenfaßt, und
- mit einer Empfangseinrichtung, die enthält: einen ersten Teil, der aus dem übertragenen optischen Signal die Übertragungs-Frequenzbänder zurückgewinnt und einen zweiten Teil, der aus diesen das das breite Frequenzband belegende Frequenzmultiplex-Signal zurückgewinnt,
**dadurch gekennzeichnet**, daß der die mehreren Übertragungs-Frequenzbänder (UB₁, UB₂) erzeugende erste Teil (B1, B2, 10) der Sendeeinrichtung durch Teilen des breiten Frequenzbandes (FB) und durch Umsetzen eines (FB₁) der dabei entstehenden Teilbänder (FB₁, FB₂) mittels Einseitenband-Amplitudenmodulation eines Trägers (f₀) zwei Übertragungs-Frequenzbänder (UB₂, UB₁) erzeugt, von denen jedes bezogen auf seine unterste Frequenz, weniger als eine Oktave breit ist, und
daß der zweite Teil (20, 13) der Empfangseinrichtung aus den zurückgewonnenen Übertragungs-Frequenzbändern (UB₂, UB₁) das breite Frequenzband (FB) durch entsprechend umgekehrte Verarbeitung zurückgewinnt.

2. System nach Anspruch 1, dadurch gekennzeichnet, daß der erste Teil der Sendeeinrichtung mehr als zwei Übertragungs-Frequenzbänder erzeugt, indem er das breite Frequenzband (FB) in mehr als zwei Teilbänder teilt und diejenigen Teilbänder, die, bezogen auf ihre unterste Frequenz, breiter als eine Oktave sind, durch Einseitenband-Amplitudenmodulation eines Trägers jeweils in ein Übertragungs-Frequenzband umsetzt, das weniger als eine Oktave breit ist, und daß der zweite Teil der Empfangseinrichtung aus den zurückgewonnenen Übertragungs-Frequenzbändern das breite Frequenzband (FB) durch entsprechend umgekehrte Verarbeitung zurückgewinnt.

3. System nach Anspruch 1, dadurch gekennzeichnet, daß das breite Frequenzband von 47 bis 440 MHz reicht, und daß der erste Teil der Sendeeinrichtung das breite Frequenzband in ein unteres Teilband (FB₁) von etwa 47 bis 230 MHz und in ein oberes Teilband (FB₂) von etwa 230 bis 440 MHz teilt und das untere Teilband (FB₁) in ein Übertragungs-Frequenzband von etwa 497 bis 680 MHz umsetzt.

4. System nach einem der vorstehenden Ansprüche, dadurch gekennzeichnet, daß zur Durchführung der Einseitenband-Amplitudenmodulation in der Sendeeinrichtung ein Modulator (1) vorhanden ist, der den Träger bei der Modulation nicht unterdrückt, oder bei der Modulation unterdrückt, jedoch seinem Ausgangssignal hinzufügt, und daß die Empfangseinrichtung eine Trägerrückgewinnungsschaltung enthält, die aus dem empfangenen Signal den Träger (f₀) rückgewinnt und in den Demodulator (8) zur Rückumsetzung des Übertragungs-Frequenzbandes eingibt.

5. System nach einem der Ansprüche 1 bis 3, dadurch gekennzeichnet, daß zur Durchführung der Einseitenband-Amplitudenmodulation in der Sendeeinrichtung ein Modulator (1) vorhanden ist, der den Träger (f₀) bei der Modulation unterdrückt, daß die Sendeeinrichtung keinen Träger zur Empfangseinrichtung sendet und daß die Empfangseinrichtung einen Trägergenerator (14) hat, der einen Träger, dessen Frequenz der des in der Sendeeinrichtung verwendeten Trägers gleich ist, für den Demodulator (8) zur Rückumsetzung des Übertragungs-Frequenzbandes erzeugt (Fig. 5).

6. System nach einem der vorstehenden Ansprüche, dadurch gekennzeichnet, daß zur Durchführung der Einseitenband-Amplitudenmodulation in der Sendeeinrichtung ein Modulator (B₁₀ bis B₁₂, M₁₀ bis M₁₂, E₁₀ bis E₁₂, V₁₀ bis V₁₂, 40) vorhanden ist, der das breite Frequenzband in mehreren Teilen durch Einseitenband-Amplitudenmodulation in das Übertragungs-Frequenzband umsetzt (Fig. 6).

7. System nach Anspruch 6, dadurch gekennzeichnet, daß der Modulator mehrere Filter (B₁₀ bis B₁₂) enthält, die das breite Frequenzband in mehrere Teilbänder aufteilen, daß er aus mehreren Teil-Modulatoren (M₁₀, E₁₀ bis M₁₂, E₁₂) besteht, die die Teilbänder durch Einseitenband-Amplitudenmodulation in ein höherfrequentes Band umsetzen und daß er einen Addierer (40) enthält, der durch Addition der mehreren höherfrequenten Bänder das Übertragungs-Frequenzband bildet (Fig. 6).

8. System nach Anspruch 7, dadurch gekennzeichnet, daß jedes der Teilbänder bezogen auf seine unterste Frequenz weniger als eine Oktave breit ist.

9. System nach Anspruch 4, dadurch gekennzeichnet, daß die Trägerrückgewinnungsschaltung eine Phasenregelschleife (51, 52, 53) enthält, und eine Steuerschaltung (54), die die Phasenregelschleife zu Beginn eines Synchronisiervorganges zur Vermeidung einer Fehlsynchronisation so steuert, daß ihr Oszillator mit einer vorgegebenen Frequenz schwingt (Fig. 7).

10. System nach Anspruch 9, dadurch gekennzeichnet, daß die Trägerrückgewinnungsschaltung einen Detektor (55) für einen bei Fehlsynchronisation entstehenden Spektralanteil hat, der falls er diesen Spektralanteil feststellt, an die Steuerschaltung (54) ein eine Neusynchronisation auslösendes Signal gibt (Fig. 7).

11. System nach Anspruch 4, dadurch gekennzeichnet, daß die Trägerrückgewinnungsschaltung aus einem Filter (60) hoher Güte für den Träger und einem Trägerverstärker (61) besteht (Fig. 8).

12. System nach Anspruch 4, dadurch gekennzeichnet, daß die Trägerrückgewinnungsschaltung aus einem Filter (70) für den Träger und einem injektionssynchronisierten Oszillator (71) besteht (Fig. 9).

13. System nach einem der vorstehenden Ansprüche, dadurch gekennzeichnet, daß die Empfangseinrichtung einen Detektor für aufgrund von Nichtlinearitäten im System auftretende Intermodulatonsprodukte hat, dem das Ausgangssignal des optischen Empfängers oder das von dessen Eingangsstufe eingegeben wird und der, wenn die Intermodulationsprodukte einen vorgegebenen Schwellenwert überschreiten, ein Alarmsignal abgibt.

## Claims

1. System for the optical transmission on a single optical waveguide of a frequency-division multiplex signal occupying a wide frequency band,
- with a transmitting installation which includes: a first part generating several transmission frequency bands and a second part which converts the generated transmission frequency bands into optical signals of different wavelengths and combines them to form, as an optical signal for transmission, a wavelength-division multiplex signal, and
- with a receiving installation which includes: a first part which recovers the transmission frequency bands from the transmitted optical signal and a second part which recovers from these transmission frequency bands the frequency-division multiplex signal occupying the wide frequency band,
characterized in that the first part (B1, B2, 10) of the transmitting installation generating the several transmission frequency bands (UB₁, UB₂) generates, through components of the wide frequency band (FB) and through conversion of one (FB₁) of the resulting sub-bands (FB₁, FB₂) by means of single-sideband amplitude modulation of a carrier (f₀), two transmission frequency bands (UB₂, UB₁), each of which is less than one octave wide relative to its lowest frequency, and that the second part (20, 13) of the receiving installation recovers the wide frequency band (FB) from the recovered transmission frequency bands (UB₂, UB₁) through correspondingly reversed processing.

2. System according to Claim 1, characterized in that the first part of the transmitting installation generates more than two transmission frequency bands in that it divides the wide frequency band (FB) into more than two sub-bands and, through single-sideband amplitude modulation of a carrier, converts each of the sub-bands which are more than one octave wide relative to their lowest frequency into a transmission frequency band which is less than one octave wide, and that the second part of the receiving installation recovers the wide frequency band (FB) from the recovered transmission frequency bands through correspondingly reversed processing.

3. System according to Claim 1, characterized in that the wide frequency band ranges from 47 to 440 MHz and that the first part of the transmitting installation divides the wide frequency band into a lower sub-band (FB₁) of about 47 to 230 MHz and an upper sub-band (FB₂) of about 230 to 440 MHz and converts the lower sub-band (FB₁) into a transmission frequency band of about 497 to 680 MHz.

4. System according to any one of the preceding Claims, characterized in that, for the purpose of effecting the single-sideband amplitude modulation, the transmitting installation has a modulator (1) which does not suppress the carrier in modulation or which does suppress it in modulation but adds it to its output signal, and that the receiving installation includes a carrier recovery circuit which recovers the carrier (f₀) from the received signal and delivers it to the demodulator (8) for reconversion of the transmission frequency band.

5. System according to any one of Claims 1 to 3, characterized in that, for the purpose of effecting the single-sideband amplitude modulation, the transmitting installation has a modulator (1) which suppresses the carrier (f₀) in modulation, that the transmitting installation does not transmit any carrier to the receiving installation and that the receiving installation has a carrier generator (14) which generates for the demodulator (8) a carrier, having a frequency which is the same as that of the carrier used in the transmitting installation, for reconversion of the transmission frequency band (Fig. 5).

6. System according to any one of the preceding Claims, characterized in that, for the purpose of effecting the single-sideband amplitude modulation, the transmitting installation has a modulator (B₁₀ to B₁₂, M₁₀ to M₁₂, E₁₀ to E₁₂, V₁₀ to V₁₂, 40) which converts the wide frequency band, in several components, into the transmission frequency band through single-sideband amplitude modulation (Fig. 6).

7. System according to Claim 6, characterized in that the modulator includes several filters (B₁₀ to B₁₂) which divide the wide frequency band into several sub-bands, that it consists of several sub-modulators (M₁₀, E₁₀ to M₁₂, E₁₂) which, through single-sideband amplitude modulation, convert the subbands into a higher-frequency band and that it includes an adder (40) which forms the transmission frequency band through addition of the several higher-frequency bands (Fig. 6).

8. System according to Claim 7, characterized in that each of the sub-bands is less than one octave wide relative to its lowest frequency.

9. System according to Claim 4, characterized in that the carrier recovery circuit includes a phase-locked loop (51, 52, 53) and a control circuit (54) which controls the phase-locked loop at the start of a synchronization process to prevent a mis-synchronization so that its oscillator oscillates at a predefined frequency (Fig. 7).

10. System according to Claim 9, characterized in that the carrier recovery circuit has a detector (55) for a spectral component occurring in the event of mis-synchronization which, upon detection of this spectral component, emits a signal to the control circuit (54) which initiates a re-synchronization (Fig. 7).

11. System according to Claim 4, characterized in that the carrier recovery circuit consists of a high-factor filter (6) for the carrier and a carrier amplifier (61) (Fig. 8).

12. System according To Claim 4, characterized in that the carrier recovery circuit consists of a filter (70) for the carrier and an injection-synchronized oscillator (71) (Fig. 9).

13. System according to any one of the preceding Claims, characterized in that the receiving installation has a detector for intermodulation products occurring as a result of non-linearities in the system to which is delivered the output signal of the optical receiver or that of its input stage and which emits an alarm signal if the intermodulation products exceed a predefined threshold value.

## Revendications

1. Système de transmission optique, au moyen d'un unique guide d'ondes lumineuses, d'un signal multiplexé en fréquence occupant une large bande de fréquences,
- comportant un dispositif d'émission qui contient: une première partie produisant plusieurs bandes de fréquences de transmission et
une seconde partie qui convertit les bandes de fréquences de transmission produites en signaux optiques de différentes longueurs d'onde et les regroupe pour donner un signal à multiplexage de longueurs d'onde comme signal optique à transmettre et
- comportant un dispositif de réception qui contient;
une première partie qui, à partir du signal optique transmis, récupère les bandes de fréquences de transmission et
une seconde partie qui, à partir de celles-ci, récupère le signal multiplexé en fréquence occupant la bande de fréquences,
caractérisé par le fait que la première partie (B1, B2, B10) du dispositif d'émission, qui produit plusieurs bandes de fréquences de transmission (UB₁, UB₂), produit, par division de la large bande de fréquences (FB) et par conversion de l'une (FB₁) des bandes partielles (FB₁, FB₂) ainsi obtenues, et au moyen d'une modulation d'amplitude à bande latérale unique d'une porteuse (f₀), deux bandes de fréquences de transmission (UB₂, UB₁) dont chacune, rapporté à sa fréquence inférieure, a une largeur inférieure à une octave et que la seconde partie (20, 13) du dispositif de réception, à partir des bandes de fréquences de transmission (UB₂, UB₁) récupérées, récupère la large bande de fréquences (FB) par un traitement inverse correspondant.

2. Système selon la revendication 1, caractérisé par le fait que la première partie du dispositif d'émission produit plus de deux bandes de fréquences de transmission, en ce sens qu'elle divise la large bande de fréquences (FB) en plus de deux bandes partielles et que ces bandes partielles, qui, rapporté à leur fréquence inférieure, ont une largeur supérieure à une octave, sont, chacune, converties, par modulation d'amplitude à bande latérale unique d'une porteuse, en une bande de fréquences de transmission de largeur inférieure à une octave et que la seconde partie du dispositif de réception, à partir des bandes de fréquences de transmission récupérées, récupère la large bande de fréquences (FB) par un traitement inverse correspondant.

3. Système selon la revendication 1, caractérisé par le fait que la large bande de fréquences va de 47 à 440 MHz et que la première partie du dispositif d'émission divise la large bande de fréquences en une bande partielle inférieure (FB₁) allant d'environ 47 à 230 MHz et en une bande partielle supérieure (FB₂) allant d'environ 230 à 440 MHz et convertit la bande partielle inférieure (FB₁) en une bande de fréquences de transmission allant d'environ 497 à 680 MHz.

4. Système selon l'une des revendications précédentes, caractérisé par le fait que pour effectuer la modulation d'amplitude à bande latérale unique est prévu dans le dispositif d'émission un modulateur (1) qui ne supprime pas la porteuse lors de la modulation, ou bien qui supprime la porteuse lors de la modulation, mais ajoute toutefois son signal de sortie, et que le dispositif de réception contient un circuit de récupération de la porteuse qui, à partir du signal reçu. récupère la porteuse (f₀) et l'envoie dans le démodulateur (8) pour rétroconversion de la bande de fréquences de transmission.

5. Système selon l'une des revendications 1 à 3, caractérisé par le fait que pour effectuer la modulation d'amplitude à bande latérale unique est prévu dans le dispositif d'émission un modulateur (1) qui supprime la porteuse (f₀) lors de la modulation, que le dispositif d'émission n'envoie pas la porteuse au dispositif de réception et que le dispositif de réception comporte un générateur de porteuse (14) qui, pour le démodulateur (8) de rétroconversion de la bande de fréquences de transmission. produit une porteuse dont la fréquence est égale à celle de la porteuse employée dans le dispositif d'émission (figure 5).

6. Système selon l'une des revendications précédentes, caractérisé par le fait que pour effectuer la modulation d'amplitude à bande latérale unique il y a dans le dispositif d'émission un modulateur (B₁₀ à B₁₂, M₁₀ à M₁₂, E₁₀ à E₁₂, V₁₀ à V₁₂, 40) qui, par modulation d'amplitude à bande latérale unique, convertit la large bande de fréquences, en plusieurs parties, en la bande de fréquences de transmission (figure 6).

7. Système selon la revendication 6, caractérisé par le fait que le modulateur contient plusieurs filtres (B₁₀ à B₁₂) qui divisent la large bande de fréquences en plusieurs bandes partielles, qu'il est constitué de plusieurs modulateurs partiels (M₁₀, E₁₀ à M₁₂, E₁₂) qui, par modulation de l'amplitude à bande latérale unique, convertissent les bandes partielles en une bande de fréquences plus élevées et qui contient un additionneur (40) qui, par addition de plusieurs bandes de fréquences plus élevées, forme la bande de fréquences de transmission (figure 6).

8. Système selon la revendication 7, caractérisé par le fait que, rapporté à sa fréquence inférieure. chacune des bandes partielles est de largeur inférieure à une octave.

9. Système selon la revendication 4, caractérisé par le fait que le circuit de récupération de la porteuse contient une boucle à phase asservie (51, 52, 53) et un circuit de commande (54) qui, au début d'un processus de synchronisation et pour éviter une synchronisation erronée. commande la boucle de phase asservie de façon que son oscillateur oscille à une fréquence prescrite (figure 7).

10. Système selon la revendication 9, caractérisé par le fait que le circuit de récupération de la porteuse comporte un détecteur (55) de composante spectrale apparaissant en cas de synchronisation erronée qui, dans le cas où il détecte cette composante spectrale, envoie au circuit de commande (54) un signal déclenchant une nouvelle synchronisation (figure 7).

11. Système selon la revendication 4, caractérisé par le fait que le circuit de récupération de la porteuse est constitué d'un filtre (60) de haute qualité pour la porteuse et d'un amplificateur de porteuse (61) (figure 8).

12. Système selon la revendication 1, caractérisé par le fait que le circuit de récupération de la porteuse est constitué d'un filtre (70) pour la porteuse et d'un oscillateur (71) synchronisé par injection (figure 9).

13. Système selon l'une des revendications précédentes caractérisé par le fait que le dispositif de réception comporte un détecteur de produits d'intermodulation apparaissant par suite de non linéarités dans le système, détecteur auquel on envoie le signal de sortie du récepteur optique ou celui de son étage d'entrée et qui, lorsque les produits d'intermodulation dépassent une valeur de seuil prescrite, émet un signal d'alarme.
